# EUROPÄISCHE PATENTSCHRIFT

(11) **EP 3 022 584 B1**
(45) Veröffentlichungstag und Bekanntmachung des Hinweises auf die Patenterteilung: **21.07.2021**
(21) Anmeldenummer: 14738443.2
(22) Anmeldetag: 30.06.2014
(51) Int. Cl.: G01S 17/931, G01S 17/42, G01S 7/481, G02B 26/10

(54) **OPTOELEKTRONISCHE DETEKTIONSEINRICHTUNG UND VERFAHREN ZUR ABTASTENDEN ERFASSUNG DER UMGEBUNG EINES KRAFTFAHRZEUGS**
OPTOELECTRONIC DETECTION DEVICE AND METHOD FOR DETECTING THE ENVIRONMENT OF A MOTOR VEHICLE IN A SCANNING MANNER
SYSTÈME DE DÉTECTION OPTOÉLECTRONIQUE ET PROCÉDÉ D'ACQUISITION PAR BALAYAGE DE L'ENVIRONNEMENT D'UN VÉHICULE AUTOMOBILE

(30) Priorität: 16.07.2013 DE 102013011853
(43) Veröffentlichungstag der Anmeldung: 25.05.2016
(73) Patentinhaber: Valeo Schalter und Sensoren GmbH, 74321 Bietigheim-Bissingen (DE)
(72) Erfinder: KOEHLER, Michael, 22527 Hamburg (DE)
(74) Vertreter: Kluth, Philipp
(86) Internationale Anmeldenummer: PCT/EP2014/063817
(87) Internationale Veröffentlichungsnummer: WO 2015/007506

(56) Entgegenhaltungen:
- EP-A1- 0 494 027
- EP-A1- 1 403 657
- WO-A1-98/16801
- WO-A1-2013/094791
- US-A1- 2005 219 506

## Beschreibung

Die Erfindung betrifft eine abtastende optoelektronische Detektionseinrichtung, insbesondere Laserscanner, für ein Kraftfahrzeug, gemäß dem Oberbegriff des Anspruchs 1. Die Erfindung betrifft ferner ein Verfahren zur abtastenden Erfassung der Umgebung eines Kraftfahrzeugs mittels einer optoelektronischen Detektionseinrichtung, insbesondere eines Laserscanners, gemäß Anspruch 4.

Im Automobilbereich werden zunehmend unterschiedlichste Fahrassistenzsysteme eingesetzt, das heißt elektronische Zusatzeinrichtungen zur Unterstützung des Fahrers in bestimmten Fahrsituationen. Dabei sind verschiedene Fahrassistenzsysteme mit Sicherheits- und Komfortfunktionen auf der Basis von Rundumsicht-Sensorik bekannt, beispielsweise adaptive Geschwindigkeitsregelungen, Kollisionsvermeidungssysteme, Einparkhilfen, Spurhalteassistenten, etc. Es sind dabei Laser-basierte Messvorrichtungen für Kraftfahrzeuge unter der Bezeichnung "Lidar" ("Light detection and ranging") bekannt, welche insbesondere der optischen Abstands- und Geschwindigkeitsmessung dienen und die Erkennung von Objekten in einer relativ großen Reichweite vom Kraftfahrzeug ermöglichen. Eine Sende- und Empfangsoptik gibt dabei elektromagnetische Strahlen aus und bildet Reflektionsstrahlen, das heißt solche Strahlen, welche an einem Zielobjekt in der Umgebung des Kraftfahrzeugs reflektiert sind, auf einen Detektor ab. In Abhängigkeit der empfangenen Reflektionsstrahlen werden elektrische Empfangssignale bereitgestellt, welche üblicherweise in einer Auswertungseinrichtung analysiert werden. Werden Echos, beziehungsweise Pulse im Empfangssignal erkannt, so sind diese auf Reflektionen des ausgesendeten Laserimpulses an Zielobjekten in der Umgebung zurückzuführen. Über eine Auswertung der Phasenverschiebung oder insbesondere der Messung der Laufzeit, werden Informationen über das erfasste Objekt ermittelt. Die Zeitdauer zwischen dem Aussenden des Laserimpulses und dem Empfangen des Echos ist proportional der Distanz zum Objekt. Laserscanner umfassen einen rotierenden Spiegelträger, welcher schrittweise bewegt wird, wobei in jedem Winkelschritt eine abtastende Erfassung erfolgt und so die Umgebung abgetastet wird. Dabei ist sowohl laterale als auch vertikale Auflösung gegeben. Mechanisches Scannen mit einer Sende- und Empfangsoptik, sowie einem rotierenden Spiegel zur Strahlumlenkung, erlaubt eine feine Winkelauflösung.

Es sind Laserscanner bekannt, deren Detektor mehrere, oft senkrecht zu einer optischen Achse der Sende- und Empfangsoptik, aufgereihte Detektorzellen umfasst. Die jeweiligen Empfangssignale der Detektorzellen werden in parallelen Messebenen ausgewertet, so dass ein mehrzeiliges Scannen gegeben ist. Innerhalb des Strahlensektors können einerseits bodennahe Strukturen in einer untenliegenden Messebene ausgewertet werden und andererseits in den oberen Messebenen, beziehungsweise Zeilen, Informationen über die Zielobjekte ermittelt werden.

Ein bekannter Laserscanner mit der Bezeichnung "Ibeo LUX" bietet ein vertikales Sichtfeld entsprechend einem Sektor von 3,2° durch den Einsatz eines mehrzeiligen Detektors mit vier Detektorzellen. Die Detektorzellen liegen dabei in einem Detektorzellenstapel aufgereiht, so dass die jeweiligen Empfangssignale parallelen Messebenen innerhalb des Erfassungsbereichs zugeordnet werden können. Der bekannte Laserscanner umfasst zwei Laserdioden als optische Sender, welche jeweils zwei der vier Detektorzellen beleuchten. Durch den Einsatz mehrerer Leuchtdioden werden die Detektorzellen in hinreichend rascher Folge belichtet, um eine hohe Abtastrate zu erreichen. Gerade bei typischen Nahbereichsanwendungen, wie Kollisionswarnungen und Fußgängerschutz, werden hohe Abtastraten gewünscht, um die entsprechende Detektionsqualität zu gewährleisten. Die Begrenzung des vertikalen Sichtfelds ist jedoch ein Nachteil des bekannten Laserscanners, da grundsätzlich ein möglichst großes vertikales Sichtfeld anzustreben ist. Für manche Anwendungen ist das begrenzte Sichtfeld des bekannten Lasers nicht ausreichend.

Zur Bereitstellung eines größeren vertikalen Sichtfelds weist ein weiterer bekannter Laserscanner mit der Bezeichnung "Ibeo LUX 8L" zusätzliche Detektorzellen auf. Außerdem sind die beiden einander abgewandt liegenden Spiegelflächen des rotierend antreibbaren Spiegelträgers in einem Kippwinkel zur Rotationsachse angeordnet, wodurch die Spiegelflächen in unterschiedlichen Richtungen Strahlen umlenken. Bei dem bekannten Laserscanner ist der verkippte Spiegelträger in einem derartigen Kippwinkel angeordnet, dass die eine Spiegelfläche einen Erfassungsbereich unterhalb der optischen Achse der Sende- und Empfangsoptik abtastet und auf einen Teil der Detektorzellen abbildet und die andere Spiegelfläche einen Erfassungsbereich oberhalb der optischen Achse erfasst und auf den anderen Teil der zur Verfügung stehenden Detektorzellen abbildet. Der bekannte Laserscanner erreicht durch die gekippte Anordnung der Spiegelflächen bei verdoppelter Anzahl der Detektorzellen eine Verdopplung der Anzahl von Messebenen und damit des vertikalen Sichtfelds im Vergleich zu einer senkrecht zur optischen Achse der Sende- und Empfangsoptik liegenden Spiegelfläche. Dabei wird ein Gesamterfassungsbereich aus dem Erfassungsbereich der einen Spiegelfläche oberhalb der optischen Achse und dem Erfassungsbereich der anderen Spiegelfläche zusammengesetzt. Die Vielzahl von Detektorzellen führt jedoch zu einer geringen Abtastrate, so dass mehrere Lichtquellen erforderlich sind.

Der bekannte Laserscanner erreicht zwar einen großen Gesamterfassungssektor, durch Zusammenfügen der jeweiligen Erfassungssektoren zweier Spiegelflächen, wobei jedoch ein enormer baulicher Aufwand, und damit entsprechende Herstellungskosten, in Kauf zu nehmen sind. Zudem geht die Erweiterung des vertikalen Sichtbereichs auf Kosten einer Verringerung, nämlich einer Halbierung der effektiven Abtastrate (Scanfrequenz). Andere Laserscanner sind aus WO98/16801A1, US2005/219506 A1, EP1403657A1, WO 2013/094791 A1 und WO2013/094791A1 (bzw. US 2014/347677 A1) und EP0494027A1 bekannt.

Der vorliegenden Erfindung liegt die Aufgabe zugrunde, mit möglichst geringem baulichem Aufwand eine kostengünstige abtastende Erfassung der Umgebung eines Kraftfahrzeugs mittels einer optoelektronischen Detektionseinrichtung zu ermöglichen. Diese Aufgabe wird erfindungsgemäß durch eine abtastende optoelektronische Detektionseinrichtung mit den Merkmalen des Anspruchs 1 gelöst. Die Aufgabe wird außerdem durch ein Verfahren zur abtastenden Erfassung der Umgebung eines Kraftfahrzeugs mittels einer optoelektronischen Detektionseinrichtung mit den Merkmalen des Anspruchs 4 gelöst.

Gemäß der Erfindung sind bei einer optoelektronischen Detektionseinrichtung mit einem rotierenden Spiegelträger zum Umlenken der gesendeten und empfangenen Strahlen die Spiegelflächen in einem derartigen Kippwinkel gegenüber der Rotationsachse angeordnet bzw. eingestellt, dass sich die Erfassungsbereiche des Detektors, welche von den gekippten Spiegelflächen unterschiedlich projiziert werden, überschneiden, das heißt abschnittsweise überdecken bzw. teilweise und nicht vollständig überlappen. Der Erfassungsbereich des Detektorzellenstapels ist dabei derjenige vertikale Bereich, in welchem der Detektorzellenstapel über die Sende- und Empfangsoptik und die Spiegelflächen des rotierenden Spiegelträgers in die zu vermessende Umgebung projiziert ist. Aufgrund der gekippten Anordnung der Spiegelflächen wird der Detektorzellenstapel von den Spiegelflächen in gegeneinander versetzte und sich überschneidende Erfassungsbereiche projiziert.

Der Detektor hat daher im Zusammenwirken mit jeder der Spiegelflächen einen jeweils unterschiedlich liegenden Erfassungsbereich. Die Sende- und Empfangsoptik ist dabei derart justiert, dass der Sendestrahl im Unendlichen auf der ins Unendliche projizierten Abbildung des Detektorzellenstapels abgebildet ist. Bei einer Auswertung der Empfangssignale der Detektorzellen ist dabei unter Berücksichtigung des Kippwinkels der Spiegelflächen eine Zuordnung der Empfangssignale in parallelen Messebenen unterschiedlicher Lage in den Erfassungsbereichen möglich, welche durch einen entsprechenden Auswertungsalgorithmus zu einem Gesamterfassungsbereich zusammengeführt werden. Dabei wird - je nachdem wie viele Detektorzellen beiden Erfassungsbereichen zugeordnet sind - eine Erweiterung des Erfassungsbereichs gemäß der Höhe des Detektorzellenstapels durch zusätzliche virtuelle Messebenen ermöglicht.

Da jede Spiegelfläche mit einem entsprechenden Kippwinkel gegenüber der Rotationsachse Strahlen umlenkt und einen bestimmten Erfassungsbereich abdeckt, überschneiden sich die Erfassungsbereiche mit dem erfindungsgemäßen Kippwinkel derart, dass mindestens eine Messebene im Erfassungsbereich des folgenden oder vorausgegangenen Abtastvorgangs liegt. Der Erfindung liegt die Erkenntnis zugrunde, dass der Erfassungsbereich eines Detektorzellenstapels zu einem größeren Gesamterfassungsbereich bei gleichzeitig hoher Abtastrate in bestimmten, nämlich den sich überdeckenden, Bereichen erweitert werden kann, wenn einzelne Detektorzellen für beide Erfassungsbereiche genutzt werden, nämlich in den sich überdeckenden Bereichen. Die Erfindung schafft einen optimalen Kompromiss der praktischen Anforderungen an eine Detektionseinrichtung, nämlich auf der einen Seite einen möglichst großen Gesamterfassungsbereich bereitzustellen und auf der anderen Seite auch eine möglichst große Abtastrate insbesondere in wichtigen Erfassungsbereichen für bestimmte Fahrassistenzanwendungen zu erzielen. Dabei werden zudem wenige Bauteile verwendet und somit Kostenersparnisse erzielt.

In einem Mittelabschnitt des Gesamterfassungsbereichs der erfindungsgemäßen Detektionseinrichtung wird eine hohe Abtastrate erreicht, da dieser Abschnitt des Gesamterfassungsbereichs von beiden Spiegelflächen gescannt wird. Auf diese Weise wird der für Nahbereichsanwendungen besonders wichtige Mittelabschnitt mit einer hohen Abtastrate bedient. Mit einer geringen Anzahl von Detektoren werden auch in den Randabschnitten des Gesamterfassungsbereichs, das heißt in den außerhalb des Überschneidungsbereichs liegenden Randabschnitten, reflektierte Strahlen erfasst und damit Zielobjekte detektiert.

In einer vorteilhaften Ausführungsform der Erfindung sind beide Spiegelflächen mit einem bestimmten Kippwinkel, bspw. 0,1° bis 10°, gegenüber der Rotationsachse des Spiegelträgers angeordnet bzw. eingestellt, wobei der gemeinsame Mittelabschnitt beider Erfassungsbereiche präzise einstellbar ist. Die Kippwinkel der Spiegelflächen können dabei unterschiedlich sein und sind jedenfalls so abgestimmt, dass die erfindungsgemäße Überschneidung der Erfassungsbereiche über die jeweiligen Spiegelflächen gewährleistet ist.

Besonders vorteilhaft liegen die Spiegelflächen parallel, wobei der Spiegelträger mit einem Kippwinkel gegenüber seiner Rotationsachse angeordnet ist. Bei dieser Ausführungsform sind beide Spiegelflächen mit dem gleichen Kippwinkel angeordnet, wobei ein vergleichsweise einfach herzustellender Spiegelträger mit parallelen Spiegelflächen für die erfindungsgemäße Ausbildung der Detektionseinrichtung, insbesondere eines Laserscanners, ausreicht und mit dem erfindungsgemäßen Kippwinkel positioniert wird. Im Umlauf des Spiegelträgers werden alternierend unterschiedliche vertikale Erfassungsbereiche mit den vorhandenen Detektorzellen gescannt. Vorteilhaft sind die Spiegelflächen in derartigen Kippwinkeln angeordnet, dass die Erfassungsbereiche der jeweiligen Spiegelflächen, auf wenigstens eine gemeinsame Detektorzelle, ausgebildet sind. Wenige Detektorzellen, welche somit eine hohe Leistungsbilanz und damit hohe Reichweite gewährleisten, können dabei einen großen Gesamterfassungsbereich erfassen bzw. scannen.

Beispielsweise bei einer Detektionseinrichtung mit drei physikalisch vorhandenen Detektorzellen kann durch die Abbildung der Erfassungsbereiche auf zwei gemeinsame Detektorzellen der Gesamterfassungsbereich um eine weitere Messebene ergänzt werden. Dabei werden gemäß der Erfindung die Empfangssignale der Detektorzellen bei den Abtastvorgängen beider Spiegelflächen jeweils virtuellen Messebenen in einer vom Kippwinkel abhängigen Höhe zugeordnet, wobei die virtuellen Messebenen zweier aufeinander folgende Abtastvorgänge auf den Gesamterfassungsbereich komplanar zusammengefügt bzw. projiziert werden. Dies erfolgt vorzugsweise im Rahmen einer Auswertung der Empfangssignale mittels einer entsprechend eingerichteten Auswertungselektronik. Bei einer beispielhaften Ausführungsform mit drei Detektorzellen, von denen zwei Detektorzellen beiden Erfassungsbereichen zugeordnet sind, können vier virtuelle Messebenen unter Berücksichtigung der Kippwinkel eingerichtet und ausgewertet werden, wodurch der Gesamterfassungsbereich des Detektors mit drei Detektorzellen bei gleich bleibendem baulichen Aufwand um etwa ein Drittel erweitert ist. Der geometrische Empfangsbereich eines Detektors im Zusammenwirken mit der Sende- und Empfangsoptik von bspw. 2,4°, welcher mit wenigen Detektorzellen und einer einzigen Lichtquelle erreichbar ist, wird durch die Erfindung auf etwa 3,2° erweitert.

In einer vorteilhaften Ausführungsform der Erfindung werden die Empfangssignale der Detektorzellen dabei jeweiligen Erfassungsbereichen der jeweils aktiven Spiegelfläche zugeordnet, wodurch unter Berücksichtigung der jeweiligen Kippwinkel der Spiegelflächen Messebenen in unterschiedlichen Erfassungsbereichen ausgewertet werden können.

Ein großer vertikaler Gesamterfassungsbereich der Detektionseinrichtung ist gemäß einer Ausführungsform der Erfindung gewährleistet, wenn die Detektorzellen in Abständen voneinander unter Ausbildung von Zwischenräumen angeordnet sind, wobei die Spiegelflächen in einem derartigen Kippwinkel angeordnet sind, dass jede Spiegelfläche die Detektorzellen in den Zwischenräumen der Abbildung der jeweils anderen Spiegelflächen abbildet. Bei dieser Ausführungsform der Erfindung sind große Gesamterfassungsbereiche der Detektionseinrichtung mit geringem baulichen Aufwand und insbesondere wenigen Detektorzellen im Detektorzellenstapel möglich, da die Detektorzellen in vertikalen Abständen angeordnet sind und die vertikalen Lücken im jeweiligen Erfassungsbereich einer Spiegelfläche durch eine entsprechende Kippung des Spiegelträgers mit einem bestimmten Kippwinkel durch den Abtastvorgang der jeweils anderen Spiegelfläche geschlossen werden.

Je nachdem wie viele Detektorzellen beiden Erfassungsbereichen zugeordnet sind bzw. in den projizierten Erfassungsbereich beider Spiegelflächen fallen- ist eine zusätzliche Erweiterung des Erfassungsbereichs gemäß der Höhe des Detektorzellenstapels durch zusätzliche virtuelle Messebenen ermöglicht.

Die Erfindung vergrößert den vertikalen Erfassungsbereich ohne Veränderung der Leistungsbilanz der Detektionseinrichtung. Im Vergleich zu der bekannten Detektionseinrichtung mit Spiegelflächen, die parallel zur Rotationsachse des Spiegelträgers liegen und daher beide Spiegelflächen stets auf alle Detektorzellen abbilden, wird bei gleicher Leistungsbilanz eine hohe Abtastrate in einem Mittelabschnitt des Gesamterfassungsbereichs gewährleistet, wobei die Randbereiche, in denen eine reduzierte Abtastrate regelmäßig ausreicht, erheblich erweitert sind.

Ausführungsbeispiele der Erfindung sind nachstehend anhand der Zeichnung näher erläutert. Es zeigen:
- Fig. 1: eine Seitenansicht eines Kraftfahrzeugs mit einer optoelektronischen Detektionseinrichtung,
- Fig. 2: eine Prinzipskizze einer Detektionseinrichtung für ein Kraftfahrzeug gemäß Fig.1,
- Fig. 3: eine Prinzipskizze eines Ausführungsbeispiels eines mehrzeiligen Detektors,
- Fig. 4: eine schematische Darstellung der Auswertung der Empfangssignale des mehrzeiligen Detektors gemäß Fig. 3,
- Fig. 5: eine schematische Darstellung der Auswertung der Empfangssignale eines weiteren Ausführungsbeispiels eines mehrzeiligen Detektors.

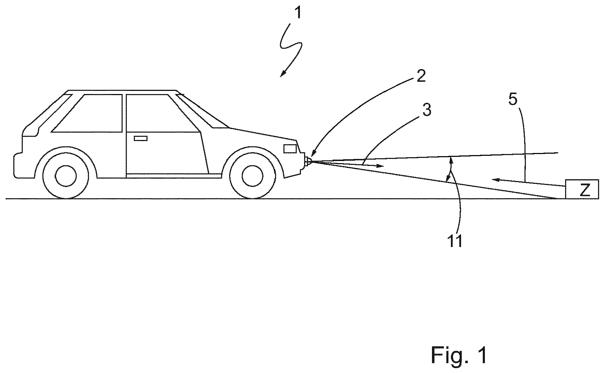

Fig. 1 zeigt die Seitenansicht eines Kraftfahrzeugs 1, welches ein oder mehrere Fahrassistenzsysteme zur Unterstützung des Fahrers aufweist, welche die Umgebung des Kraftfahrzeugs 1 berücksichtigen. Die Fahrassistenzsysteme umfassen eine nicht dargestellte zentrale Rechnereinheit, sowie eine die Zentraleinheit mit Messdaten versorgende Sensorik. Die Fahrzeugsensorik umfasst insbesondere eine oder mehrere optoelektronische Detektionseinrichtungen 2, nämlich Laserscanner. Im gezeigten Ausführungsbeispiel ist eine derartige Detektionseinrichtung 2 im vorderen Bereich des Kraftfahrzeugs 1 platziert, nämlich im Bereich des Kühlergrills. Die Detektionseinrichtung 2 überwacht dabei die Umgebung des Kraftfahrzeugs 1. Sie ist Teil eines Lidar-Systems, wobei elektromagnetische Strahlen 3 (Laserpulse) ausgesendet werden und das von einem Zielobjekt Z in der Umgebung des Kraftfahrzeugs 1 reflektierte Licht (Strahl 5) detektiert wird.

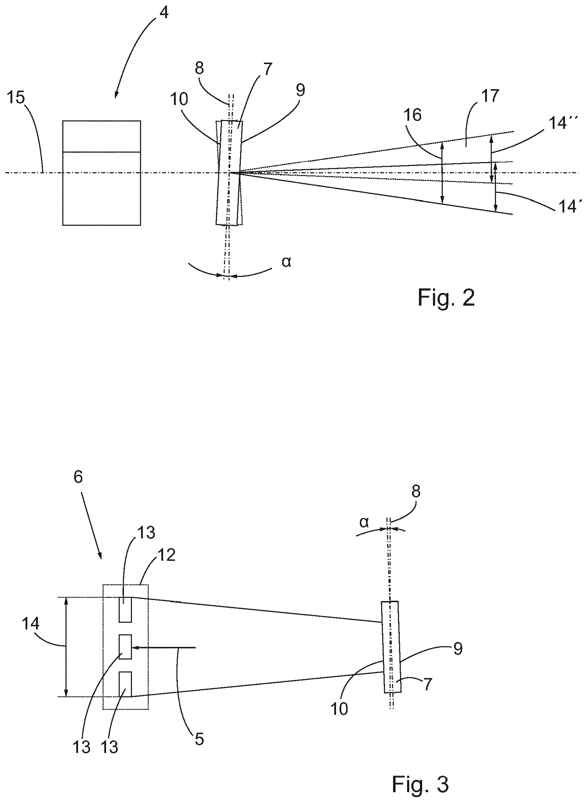

Fig. 2 und Fig. 3 zeigen den prinzipiellen Aufbau der Detektionseinrichtung 2. Die Detektionseinrichtung 2 weist eine Sende- und Empfangsoptik 4 auf, welche die elektromagnetischen Strahlen 3 eines nicht dargestellten optischen Senders ausgibt und die reflektierten Strahlen 5 auf einen Detektor 6 (Fig. 3) abbildet. Der Sende- und Empfangsoptik 4 ist ein Spiegelträger 7 zugeordnet, welcher um eine Rotationsachse 8 rotierend antreibbar ist und die gesendeten Strahlen 3 auf die zu vermessende Szene umlenkt. Die reflektierten Strahlen 5 werden von dem Spiegelträger 7 zum Detektor 6 umgelenkt. Der Spiegelträger 7 umfasst zwei einander abgewandt liegende Spiegelflächen 9, 10, welche im gezeigten Ausführungsbeispiel parallel liegen. Der Spiegelträger 7 wird im Betrieb der Detektionseinrichtung 2 in Winkelschritten gedreht, so dass eine Abtastung des gesamten Sichtfelds innerhalb eines bestimmten Abtastwinkelbereichs stattfindet. Pro Abtastwinkel wird dabei ein Laserimpuls ausgesendet. Im selben Winkelschritt werden die reflektierten Strahlen 5 mittels des Detektors empfangen und entsprechende elektrische Empfangssignale bereitgestellt. Werden Echos, beziehungsweise Pulse, im Empfangssignal erkannt, so sind diese auf Reflektionen der ausgesendeten Strahlen 3 an Zielobjekten Z in der Umgebung zurückzuführen. Die Laufzeit zwischen dem Aussenden und dem Empfangen des Echos ist proportional zur Distanz zum Zielobjekt Z. Aus einer Messung der Laufzeit wird ein Rückschluss auf die Entfernung zum Zielobjekt Z gezogen.

Die Detektionseinrichtung 2 ist mehrzeilig ausgebildet, das heißt es findet eine Auswertung mehrerer Messebenen innerhalb eines Erfassungssektors 11 statt. Für eine mehrzeilige Überwachung der Umgebung des Kraftfahrzeugs 1 umfasst der Detektor 6 einen Detektorzellenstapel 12 mit mehreren, im gezeigten Ausführungsbeispiel drei, Detektorzellen 13. Die Detektorzellen 13 sind Avalanche- Photodioden, welche bei Belichtung durch reflektierte Strahlen 5 elektrische Signale erzeugen. Die Detektorzellen 13 erzeugen demnach abhängig von den empfangenen reflektierten Strahlen 5 elektrische Empfangssignale, welche einer nicht gezeigten Auswertungselektronik bereitgestellt werden.

Die Sende- und Empfangsoptik 4 ist derartig justiert, dass der abgegebene Laserstrahl im Unendlichen exakt auf der ins Unendliche projizierten Abbildung des Detektors 6 abgebildet wird. Der optische Erfassungsbereich 14 des Detektorzellenstapels 12, entsprechend der aneinander gereihten Detektorzellen 13, wird somit über den Spiegelträger 7 umgelenkt und in den zu überwachenden Raum projiziert.

Der Spiegelträger 7 ist mit einem bestimmten Kippwinkel α gegenüber seiner Rotationsachse 8 gekippt angeordnet. Die parallelen Spiegelflächen 9, 10 liegen daher mit dem Kippwinkel α gegenüber der Rotationsachse 8 des Spiegelträgers 7 gekippt, sodass der optische Erfassungsbereich 14 des Detektorzellenstapels 12 entsprechend dem Kippwinkel α von den beiden Spiegelflächen 9, 10 in unterschiedlichen Richtungen umgelenkt bzw. in unterschiedliche Erfassungsbereiche 14', 14" in die Umgebung projiziert ist. Mit der einen Spiegelfläche 9 werden reflektierte Strahlen aus einem projizierten Erfassungsbereich 14' zum Detektor 6 umgelenkt, welche aufgrund des Kippwinkels α zu der einen Seite einer optischen Achse 15 der Sende- und Empfangsoptik 4 versetzt liegt. Die andere Spiegelfläche 10 erfasst entsprechend dem Kippwinkel α einen auf der anderen Seite der optischen Achse 15 liegenden projizierten Erfassungsbereich 14". Der Kippwinkel α der Spiegelflächen 9, 10 ist erfindungsgemäß derart ausgewählt, dass sich die projizierten Erfassungsbereiche 14', 14" abschnittsweise überdecken. Der Kippwinkel α ist derart ausgewählt, dass die Erfassungsbereiche 14', 14" auf wenigstens eine gemeinsame Detektorzelle 13 im Detektorzellenstapel 12 abgebildet sind. Die Größe des Kippwinkels α kann durch empirische Ermittlung, insbesondere durch Versuche, bestimmt werden und ist umso größer, je kleiner der gewünschte Überschneidungsbereich ist, in welchem eine hohe Abtastrate gewährleistet werden soll. Im gezeigten Ausführungsbeispiel beträgt der Kippwinkel α in Abstimmung mit den geometrischen Verhältnissen, die sich aus der Lage der optischen Elemente der Einrichtung ergeben, beispielsweise der Lage der Detektorzellen relativ zum Spiegelträger 7, etwa 0,3°.

Die beiden aufgrund der gekippten Spiegelflächen 9, 10 gegeneinander versetzten Erfassungsbereiche 14', 14" ermöglichen über zwei aufeinander folgende Abtastvorgänge bei einer vollen Umdrehung des Spiegelträgers 7 einen erweiterten Gesamterfassungsbereich 16, welcher beide projizierten Erfassungsbereiche 14', 14" einschließt. Der Gesamterfassungsbereich 16 umfasst dabei einen Mittelabschnitt 17 im Bereich der optischen Achse 15, in welchem reflektierte Strahlen über beide Spiegelflächen 9, 10 auf die Detektorzellen 13 abgebildet werden und somit eine verdoppelte Abtastrate im Vergleich zu den Randbereichen 18 außerhalb des zentralen Mittelabschnitts 17 gewährleisten. Durch dem im zentral liegenden Mittelabschnitt 17, in welcher für die Erfassung von Zielobjekten im Nahbereich besonders wichtig ist, wird daher eine für solche Anwendungen, wie beispielsweise Fußgängerschutz, hohe Abtastrate bereitgestellt.

Bei der Auswertung der Empfangssignale der Detektorzellen 13 werden die Empfangssignale parallelen Messebenen innerhalb der Erfassungsbereiche 14', 14" zugeordnet und aus den Messebenen beider Erfassungsbereiche 14', 14" der Gesamterfassungsbereich 16 für zwei aufeinander folgende Abtastvorgänge ermittelt. Dabei wird durch einen entsprechenden Kippwinkel α sichergestellt, dass mindestens eine Messebene in beiden Erfassungsbereichen 14', 14" des Detektors 6 in aufeinander folgenden Abtastvorgängen liegt. Die Empfangssignale der Detektorzellen 13 werden dabei jeweils parallelen Messebenen in einer vom Kippwinkel α abhängigen Höhe zugeordnet. Im gezeigten Ausführungsbeispiel liegen zwei Detektorzellen 13 in beiden Erfassungsbereichen 14', 14", wodurch jeweils eine Detektorzelle 13 in den Randbereichen 18 liegt. In den Randbereichen 18 liegt dabei jeweils diejenige Detektorzelle, welche in der Reihe der Detektorzellen 13 außen liegt.

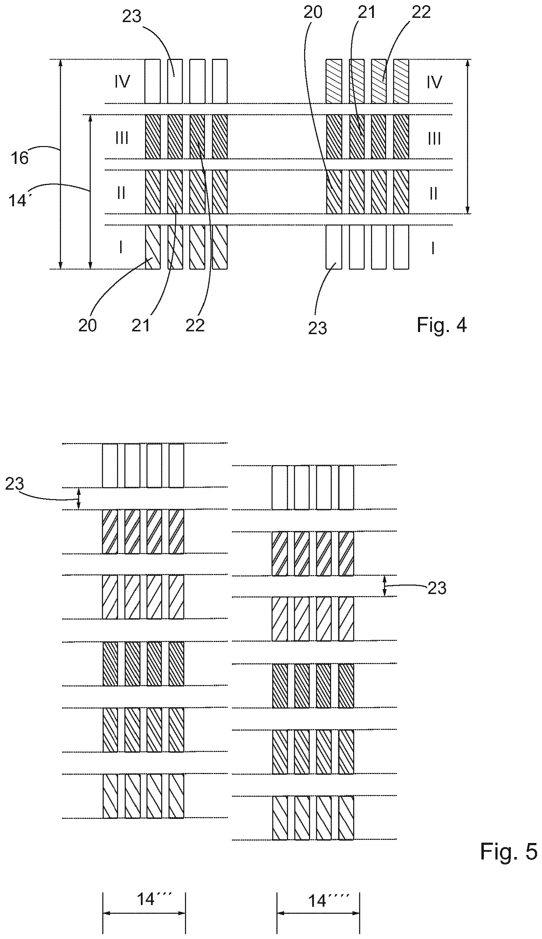

Ein Beispiel zur Projektion der drei Detektorzellen über den rotierenden Spiegelträger 7 der Detektoreinrichtung 2 des Ausführungsbeispiels gemäß Fig. 2 und Fig. 3 zeigt das Auswertungsschema gemäß Fig. 4. Auf der linken Seite der Darstellung gemäß Fig. 4 ist der Erfassungsbereich 14' für die eine Spiegelfläche 9 dargestellt, wobei jede der drei Detektorzellen elektrische Empfangssignale 20, 23, 24 liefert. Diese Empfangssignale bzw. der durch die Empfangssignale repräsentierte Abschnitt des Erfassungsbereichs des Detektorzellenstapels werden parallelen Messebenen I, II, III zugeordnet. Über die zweite Spiegelfläche 10 werden die Empfangssignale 20, 21, 22 der drei Detektorzellen in einem vom Kippwinkel abhängig versetzten Erfassungsbereich 14" erfasst und entsprechenden parallelen Messebenen zugeordnet. Unter Berücksichtigung der versetzten Lage der Erfassungsbereiche 14', 14" werden die Messsignale 20, 21, 22 beim Abtastvorgang über die zweite Spiegelfläche 10 den Messebenen II, III, IV zugeordnet. Bei der Auswertung der Empfangssignale 20, 21, 22 werden die parallelen Messebenen beider Spiegelflächen 9, 10 komplanar projiziert auf den Gesamterfassungsbereich 16, welcher demnach sämtliche vier Messebenen I, II, III, IV umfasst. Dabei werden die mittleren Messebenen 2, 3 in beiden Abtastvorgängen erfasst, so dass eine verdoppelte Abtastrate gegenüber den Randbereichen 17 (Fig.2) gegeben ist, welcher in der schematischen Auswertungsdarstellung gemäß Fig. 4 durch die Messebenen I, IV charakterisiert ist.

In einem nicht gezeigten Ausführungsbeispiel überschneiden sich die Erfassungsbereiche abhängig von einem entsprechenden Kippwinkel der Spiegelflächen über eine gemeinsame Messebene bzw. Abbildung einer Detektorzelle. Dabei weist die Detektoreinrichtung einen größeren Gesamterfassungsbereich als das Ausführungsbeispiel mit zwei Messebenen im überschneidenden Mittelabschnitt, wobei letzteres Ausführungsbeispiel den Vorteil eines größeren Mittelabschnitts mit erhöhter Abtastrate bietet.

Die Leistung einer Strahlenquelle wird auf lediglich drei Zellen verteilt, so dass eine hohe Leistungsbilanz der Detektionseinrichtung gegeben ist und damit eine hohe Reichweite erreicht ist. Gleichwohl wird durch den erfindungsgemäßen Kippwinkel derart, dass sich die Erfassungsbereiche 14', 14" beider Spiegelflächen 9, 10 in einem Mittelabschnitt 17 teilweise überdecken, ein Gesamterfassungsbereich 16 mit vier parallelen Messebenen I, II, III, IV bereit gestellt. Anders ausgedrückt wird der Erfassungsbereich der Detektorzellen 13, welcher einem Erfassungssektor von 2,4° entsprechen mag, um etwa ein Drittel auf einen Erfassungsbereich von 3,2° vergrößert, ohne die Leistungsbilanz zu verändern.

Fig. 5 zeigt eine grafische Darstellung des Auswertungsschemas eines weiteren Ausführungsbeispiels einer Detektionseinrichtung, deren Detektorzellenstapel im Unterschied zum Ausführungsbeispiel gemäß Fig. 3 sechs Detektorzellen 13 umfasst. Die Detektorzellen sind innerhalb des Detektorzellenstapels unter Ausbildung von Zwischenräumen beabstandet angeordnet, so dass der Detektorzellenstapel mit einer vergleichsweise geringen Anzahl von Detektorzellen einen großen Erfassungsbereich abdecken kann. Auf der linken Seite der Darstellung ist dabei der Erfassungsbereich 14''' dargestellt, der von der einen Spiegelfläche 9 des Spiegelträgers auf den Detektor mit sechs Detektorzellen abgebildet ist. Auf der rechten Seite ist der Erfassungsbereich 14"" des Detektors über die zweite Spiegelfläche 10 dargestellt. Entsprechend der beabstandeten Anordnung der Detektorzellen weist jeder Erfassungsbereich 14"', 14"" Zwischenräume 23 zwischen den Bereichen ab, welche von einzelnen Detektorzellen erfasst sind und zu denen Empfangssignale in jeweiligen Messebenen vorliegen

Um bei der Auswertung der Empfangssignale die Lücken zu schließen, welche durch die Abstände 23 zwischen den Detektorzellen 13 bei der Belichtung durch die eine Spiegelfläche 9 entstehen, wird der Kippwinkel α des Spiegelträgers 7 (Fig. 2) derartig bestimmt, dass die andere Spiegelfläche 10 die Detektorzellen in den Zwischenräumen 23 abdeckt. Im Ausführungsbeispiel mit parallelen Spiegelflächen 9, 10 am Spiegelträger 7 wird der Kippwinkel derartig bestimmt, dass jede Spiegelfläche 9, 10 die Detektorzellen 13 in den Zwischenräumen 23 der Abbildung der jeweils anderen Spiegelfläche 9, 10 abbildet. Durch Abstände 23 zwischen den Detektorzellen 13 wird eine deutliche Vergrößerung des vertikalen Erfassungsbereichs der Detektionseinrichtung ermöglicht, wobei die optischen Lücken in den jeweiligen Abtastbereichen beider Spiegelflächen 9, 10 durch die Kippung des Spiegelträgers 7 geschlossen werden. Im Beispiel gemäß Fig. 5 sind die Detektorzellen in einem Abstand angeordnet, dass die vertikalen Lücken im Erfassungsbereich etwa 50 % der vertikalen Ausdehnung der aktiven Flächen der Detektorzellen 13 betragen.

## Patentansprüche

1. Abtastende optoelektronische Detektionseinrichtung, insbesondere Laserscanner, für ein Kraftfahrzeug (1), mit einer Sende- und Empfangsoptik (4), welche elektromagnetische Strahlen (3) ausgibt und an einem Zielobjekt in einer Umgebung des Kraftfahrzeugs (1) reflektierte Strahlen (5) auf einen Detektor (6) abbildet, sowie mit einem rotierend antreibbaren Spiegelträger (7), welcher zur Umlenkung der gesendeten Strahlen (3) und der reflektierten Strahlen (5) der Sende- und Empfangsoptik (4) zugeordnet ist und einander abgewandt liegende Spiegelflächen (9, 10) aufweist, wobei der Detektor (6) mehrzeilig ausgebildet ist und mehrere Detektorzellen (13) zum Bereitstellen elektrischer Empfangssignale abhängig von empfangenen reflektierten Strahlen (5) umfasst, welche in einem Detektorzellenstapel (12) aufgereiht liegen und in parallelen Messebenen (I, II, III, IV) auswertbar sind, wobei die Spiegelflächen nur mit einem Kippwinkel gegenüber einer Rotationsachse (8) des Spiegelträgers (7) gekippt angeordnet sind und unterschiedliche vertikale Erfassungsbereiche für reflektierte Strahlen (5) auf den Detektor (6) abbilden,
wobei sich durch derartige Kippwinkel (α) der Spiegelflächen (9, 10) die Erfassungsbereiche (14', 14", 14"', 14"") in wenigstens einem Abschnitt eines Gesamterfassungsbereichs (16) für zwei aufeinander folgende Abtastvorgänge bei einer vollen Umdrehung des Spiegelträgers (7) überschneiden,
wobei jede der Spiegelflächen (9, 10) mit bestimmten Kippwinkeln (α) gegenüber der Rotationsachse (8) des Spiegelträgers (7) angeordnet ist
**dadurch gekennzeichnet, dass**
die Spiegelflächen (9, 10) parallel liegen und der Spiegelträger (7) mit einem Kippwinkel α gegenüber seiner Rotationsachse (8) angeordnet ist.

2. Detektionseinrichtung nach einem der Ansprüche 1,
**gekennzeichnet durch** derartige Kippwinkel (α) der Spiegelflächen (9, 10), dass die Erfassungsbereiche (14', 14", 14"', 14"") auf wenigstens eine gemeinsame Detektorzelle (13) abgebildet sind.

3. Detektionseinrichtung nach einem der Ansprüche 1 2,
**dadurch gekennzeichnet, dass** die Detektorzellen (13) in Abständen von einander unter Ausbildung von Zwischenräumen (23) angeordnet sind, wobei die Spiegelflächen (9, 10) in einem derartigen Kippwinkel (α) angeordnet sind, dass jede Spiegelfläche (9, 10) die Detektorzellen (9, 10) in den Zwischenräumen (23) der Abbildung der jeweils anderen Spiegelfläche (9, 10) abbildet.

4. Verfahren zur abtastenden Erfassung der Umgebung eines Kraftfahrzeugs (1) mittels einer abtastenden optoelektronischen Detektionseinrichtung (2) gemäß Anspruch 1.

5. Verfahren nach Anspruch 4,
**dadurch gekennzeichnet, dass** die Empfangssignale (20, 21, 22) der Detektorzellen (13) jeweiligen Erfassungsbereichen (14', 14") der Spiegelflächen (9, 10) zugeordnet werden.

6. Verfahren nach Anspruch 5 oder 4,
**dadurch gekennzeichnet, dass** die Empfangssignale (20, 21, 22) der Detektorzellen (13) bei den Abtastvorgängen beider Spiegelflächen (9, 10) jeweils parallelen Messebenen (I, II, III, IV) in einer vom Kippwinkel α abhängigen Höhe zugeordnet werden und die parallel Messebenen (I, II, III, IV) zweier aufeinander folgenden Abtastvorgänge auf den Gesamterfassungsbereich (16) komplanar projiziert werden.

## Claims

1. Scanning opto-electronic detection device, in particular laser scanner, for a motor vehicle (1), having a transmitting and receiving optical system (4) that outputs electromagnetic rays (3) and maps rays (5) that are reflected from a target object in surroundings of the motor vehicle (1) onto a detector (6), and also having a mirror carrier (7) that can be driven in rotation and that, for the purpose of deflecting the transmitted rays (3) and the reflected rays (5), is associated with the transmitting and receiving optical system (4) and has mirror faces (9, 10) that are remote from one another, wherein the detector (6) is of multiline design and comprises multiple detector cells (13) for providing electrical received signals on the basis of received reflected rays (5), said detector cells being lined up in a detector cell stack (12) and being evaluable in parallel measurement planes (I, II, III, IV), wherein the mirror faces are arranged in a manner tilted only at a tilt angle with respect to an axis of rotation (8) of the mirror carrier (7) and map different vertical sensing regions for reflected rays (5) onto the detector (6),
wherein such tilt angles (α) of the mirror faces (9, 10) result in the sensing regions (14', 14'', 14''', 14'''') intersecting in at least one section of a total sensing region (16) for two successive scanning processes on a full revolution of the mirror carrier (7),
each of the mirror faces (9, 10) being arranged at specific tilt angles (α) with respect to the axis of rotation (8) of the mirror carrier (7), **characterized in that**
the mirror faces (9, 10) are situated parallel and the mirror carrier (7) is arranged at a tilt angle α with respect to its axis of rotation (8).

2. Detection device according to one of Claims 1,
**characterized by** tilt angles (α) of the mirror faces (9, 10) that are such that the sensing regions (14', 14'', 14''', 14'''') are mapped onto at least one common detector cell (13).

3. Detection device according to either of Claims 1 and 2,
**characterized in that** the detector cells (13) are arranged at intervals from one another to form intermediate spaces (23), wherein the mirror faces (9, 10) are arranged at a tilt angle (α) that is such that each mirror face (9, 10) maps the detector cells (9, 10) in the intermediate spaces (23) of the mapping of the respective other mirror face (9, 10).

4. Method for sensing the surroundings of a motor vehicle (1) by scanning by means of a scanning opto-electronic detection device (2) according to Claim 1.

5. Method according to Claim 4,
**characterized in that** the received signals (20, 21, 22) of the detector cells (13) are assigned to respective sensing regions (14', 14'') of the mirror faces (9, 10).

6. Method according to Claim 5 or 4,
**characterized in that** the received signals (20, 21, 22) of the detector cells (13) are each assigned, during the scanning processes of both mirror faces (9, 10), to parallel measurement planes (I, II, III, IV) at a height that is dependent on the tilt angle α, and the parallel measurement planes (I, II, III, IV) of two successive scanning processes are projected onto the total sensing region (16) in coplanar fashion.

## Revendications

1. Système de détection optoélectronique par balayage, en particulier scanner laser, pour un véhicule automobile (1), comprenant une optique d'émission et de réception (4) qui émet des rayons électromagnétiques (3) et représente sur un détecteur (6) des rayons (5) réfléchis sur un objet cible dans un environnement du véhicule automobile (1), et comprenant un porte-miroir (7) pouvant être entraîné en rotation qui est associé à l'optique d'émission et de réception (4) pour dévier les rayons émis (3) et les rayons réfléchis (5) et présente des surfaces réfléchissantes (9, 10) opposées, le détecteur (6) étant réalisé à plusieurs barrettes et comprenant plusieurs cellules de détection (13) pour fournir des signaux de réception électriques en fonction de rayons réfléchis (5) reçus, qui sont alignées dans un empilage de cellules de détection (12) et peuvent être évaluées dans des plans de mesure parallèles (I, II, III, IV), dans lequel les surfaces réfléchissantes sont disposées de manière inclinée seulement selon un angle d'inclinaison par rapport à un axe de rotation (8) du porte-miroir (7), et représentent sur le détecteur (6) différentes zones d'acquisition verticales pour des rayons réfléchis (5),
dans lequel, en raison de ces angles d'inclinaison (α) des surfaces réfléchissantes (9, 10), les zones d'acquisition (14', 14", 14"', 14"") se recoupent dans au moins une partie d'une zone d'acquisition totale (16) pour deux processus de balayage consécutifs lors d'une rotation complète du porte-miroir (7),
chacune des surfaces réfléchissantes (9, 10) étant disposée selon des angles d'inclinaison déterminés (α) par rapport à l'axe de rotation (8) du porte-miroir (7),
**caractérisé en ce que** les surfaces réfléchissantes (9, 10) sont parallèles, et le porte-miroir (7) est disposé selon un angle d'inclinaison (α) par rapport à son axe de rotation (8).

2. Système de détection selon l'une quelconque des revendications 1, **caractérisé par** de tels angles d'inclinaison (α) des surfaces réfléchissantes (9, 10) que les zones d'acquisition (14', 14", 14"', 14"") sont représentées sur au moins une cellule de détection (13) commune.

3. Système de détection selon l'une quelconque des revendications 1 et 2, **caractérisé en ce que** les cellules de détection (13) sont disposées à des intervalles les unes des autres en réalisant des espaces intermédiaires (23), les surfaces réfléchissantes (9, 10) étant disposées selon un tel angle d'inclinaison (α) que chaque surface réfléchissante (9, 10) représente les cellules de détection (9, 10) dans les espaces intermédiaires (23) de la représentation de l'autre surface réfléchissante (9, 10) respectivement.

4. Procédé d'acquisition par balayage de l'environnement d'un véhicule automobile (1) au moyen d'un système de détection optoélectronique par balayage (2) selon la revendication 1.

5. Procédé selon la revendication 4, **caractérisé en ce que** les signaux de réception (20, 21, 22) des cellules de détection (13) sont associés à des zones d'acquisition (14', 14") respectives des surfaces réfléchissantes (9, 10).

6. Procédé selon la revendication 5 ou 4, **caractérisé en ce que** lors des processus de balayage des deux surfaces réfléchissantes (9, 10), les signaux de réception (20, 21, 22) des cellules de détection (13) sont associés respectivement à des plans de mesure (I, II, III, IV) parallèles à une hauteur dépendant de l'angle d'inclinaison (α), et les plans de mesure (I, II, III, IV) parallèles de deux processus de balayage consécutifs sont projetés de manière coplanaire sur la zone d'acquisition totale (16).
